# EUROPÄISCHE PATENTANMELDUNG

(11) **EP 2 735 348 A1**
(43) Veröffentlichungstag der Anmeldung: **28.05.2014**
(21) Anmeldenummer: 12193968.0
(22) Anmeldetag: 23.11.2012
(51) Int. Cl.: B01D 21/00, E03F 5/16

(54) **Abscheider mit Trägerkonstruktion**

(71) Anmelder: Kessel AG, 85101 Lenting (DE)
(72) Erfinder: Kessel, Bernhard, 85101 Lenting (DE)
(74) Vertreter: Grünecker, Kinkeldey, Stockmair & Schwanhäusser

(57) **Zusammenfassung**

Die Erfindung betrifft eine Abscheideanlage (1), insbesondere Fettabscheideanlage, welche einen Abscheidebehälter (2) und eine Trägerkonstruktion (3) zum Aufstellen des Abscheidebehälters (2) aufweist, wobei der Boden (4) des Abscheidebehälters (2) zumindest abschnittsweise zu einem Schlammabzug (6) hin schräg verlaufend ausgebildet ist. Um die Abscheideanlage dahingehend zu verbessern, dass diese zwar eine stabile Bodenkonstruktion aufweist, dabei aber dennoch weitestgehend rückstandslos entleert werden kann und dabei gleichzeitig einfach reinigbar ist, sind die Trägerkonstruktion (3) und der Abscheidebehälter (2) separat voneinander ausgeführt, und die Trägerkonstruktion (3) ist an dem Boden (4) des Abscheidebehälters (2) anbringbar.

## Beschreibung

Die Erfindung betrifft eine Abscheideanlage gemäß dem Oberbegriff des Anspruchs 1.

Derartige Abscheideanlagen werden in das Abwassersystem von Gebäuden integriert und säubern das dort anfallende Abwasser weitestgehend von darin befindlichen organischen und anorganischen Bestandteilen. Es existieren unter anderem Fettabscheider zum Abscheiden von Fetten und Ölen, Leichtflüssigkeitsabscheider zum Abscheiden von Öl und Benzin, Sinkstoffabscheider zum Abscheiden von zu Boden sinkenden Rückständen sowie Stärkeabscheider zum Abscheiden organischer Stärke. Diese Abscheideanlagen arbeiten meist nach dem Prinzip der durch die Schwerkraft bedingten Phasentrennung.

Die Abscheidebehälter, durch die das Abwasser zur Reinigung hindurchfließt, weisen für gewöhnlich ein Volumen von mehreren 100 Litern bis zu mehreren 1000 Litern auf. Daher ergeben sich für Abscheideanlagen erhöhte Anforderungen an die Stabilität der Abscheidebehälter, insbesondere im Bereich des Behälterbodens, der schwerkraftbedingt den durch die darüberliegende Wassersäule verursachten größten Belastungen Stand halten muss. Außerdem sammeln sich auf dem Boden des Abscheidebehälters während des Betriebs Sinkstoffe in Form von Sinkschlamm ab, welcher den Boden zusätzlich belastet.

Die DE 296 01 495 U1 offenbart eine gattungsgemäße Abscheideanlage. Diese Abscheideanlage weist einen Abscheidebehälter mit einer im Wesentlichen rechteckigen Form auf. Der Boden dieses Abscheidebehälters verläuft horizontal, das heißt im Wesentlichen parallel zu dem Wasserspiegel des in dem Behälter befindlichen Abwassers. Innerhalb des Abscheidebehälters sind im Bereich dieses Bodens zwei Schrägen eingebaut, welche jeweils an deren einem Ende mit einer Seitenwand des Abscheidebehälters und an deren anderem Ende mit dem horizontalen Boden verbunden sind.

Derartige Abscheideanlagen bestehen in der Regel aus Kunststoff. Die Schrägen werden dabei mit Kunststoffschweißnähten an dem Abscheidebehälter angebracht. Es besteht jedoch das Problem, dass die Schrägen von dem durch die Wassersäule ausgeübten Druck sowie dem darauf lastenden Sinkschlamm überbelastet werden und sich in Richtung des darunterliegenden horizontalen Bodens ausbuchten. Dies kann zu Spannungsrissen in den Kunststoffschweißnähten führen. Außerdem sammelt sich Sinkschlamm in diesen Ausbuchtungen an, so dass der Abscheidebehälter nicht rückstandslos entleert werden kann.

Es sind außerdem Abscheideanlagen bekannt, deren Schrägen einteilig mit dem Abscheidebehälter ausgeformt sind. Der Herstellungsprozess ist jedoch aufwendig, da diese Bodenkonstruktionen Versteifungen aufweisen müssen. Derartige Versteifungen sind in Form von Versteifungsrippen ausgeführt, die sich jedoch durch die Schrägen hindurch in den Behälterinnenraum hinein erstrecken. In den Zwischenräumen dieser Rippen sammelt sich Sinkschlamm an, so dass auch bei solchen Abscheideanlagen die rückstandslose Entleerung des Abscheidebehälters nicht gewährleistet werden kann. Außerdem wird die Reinigung des Behälters erschwert.

Wiederum andere Abscheideanlagen besitzen separate Standfüße, welche die Schrägen bodenseitig abstützen sollen. Die Standfüße werden mit den Schrägen verschraubt. Dies geschieht in der Regel durch den Monteur am Einbauort. Der sichere und fachgerechte Aufbau ist jedoch aufwendig und benötigt viel Zeit. Die Verschraubungspunkte bilden außerdem Unebenheiten in den Schrägen auf der Behälterinnenseite. Da sich in diesen Unebenheiten Sinkschlamm verfängt, verbleiben beim Entleeren Rückstände in dem Behälter. Außerdem erschweren die Unebenheiten die Reinigung des Behälterbodens.

Der vorliegenden Erfindung liegt die Aufgabe zugrunde, eine Abscheideanlage der eingangs genannten Gattung dahingehend zu verbessern, dass diese zwar eine stabile Bodenkonstruktion aufweist, dabei aber dennoch weitestgehend rückstandslos entleert werden kann und dabei einfach reinigbar und gleichzeitig einfach herstellbar sowie einfach und schnell montierbar ist.

Diese Aufgabe wird erfindungsgemäß durch eine Abscheideanlage mit den Merkmalen des Anspruchs 1 gelöst.

Die von dem Abscheidebehälter separat ausgeführte Trägerkonstruktion stützt den Boden des Abscheidebehälters gegen die von der Abwassersäule und dem Sinkschlamm aufgebrachten Kräfte ab. Versteifungen können in der separaten Trägerkonstruktion vorgesehen werden. So kann der Abscheidebehälter einteilig ausgeführt sein und dabei gleichzeitig eine einfache Bodenkonstruktion aufweisen. Sowohl der Abscheidebehälter als auch die Trägerkonstruktionen sind somit einfach herstellbar. Eine solche durch die separate Ausführung der Trägerkonstruktion und des Abscheidebehälters bedingte einfache Bodenkonstruktion ermöglicht es außerdem, dass zu Boden sinkender Schlamm möglichst ungehindert und vollständig zu einem Schlammabzug hin abgleiten kann. So kann der Sinkschlamm gut aus dem Abscheidebehälter abgezogen werden und mit nur geringen im Behälter verbleibenden Rückständen entleert werden. Zudem ermöglicht die durch die separate Ausführung der Trägerkonstruktion und des Abscheidebehälters bedingte einfache Bodenkonstruktion bei Bedarf eine einfache Reinigung des Behälterbodens im Innenraum des Abscheidebehälters. Darüber hinaus kann ein Abscheidebehälter mit Hilfe separater Trägerkonstruktionen einfach an unterschiedliche spezifische, am Einbauort vorherrschende Bedingungen angepasst werden. Der fachgerechte und sichere Aufbau der Abscheideanlage erfolgt dabei aufgrund des Schnellverschlusses einfach und schnell.

Es ist denkbar, dass der Schnellverschluss ein Verbindungselement zum Verbinden des Abscheidebehälters mit der Trägerkonstruktion aufweist, wobei das Verbindungselement in eine in dem Abscheidebehälter vorgesehene Öffnung und in eine in der Trägerkonstruktion vorgesehene Öffnung einführbar ist. So kann der Abscheidebehälter einfach und schnell mit der Trägerkonstruktion verbunden werden.

Es ist vorstellbar, dass der Schnellverschluss als eine Rastverbindung ausgeführt ist, wobei das Verbindungselement eine Rastnase aufweist. So kann das Verbindungselement zwischen Abscheidebehälter und Trägerkonstruktion verriegelt und gegen ein Herausfallen oder Herausziehen gesichert werden.

Möglicherweise kann die Rastnase in einem zwischen dem Abscheidebehälter und der Trägerkonstruktion vorgesehenen Spalt einrasten. So kann die Rastverbindung schnell und einfach mit bereits vorhandenen Strukturen genutzt werden.

Es ist denkbar, dass die in dem Abscheidebehälter vorgesehene Öffnung und die in der Trägerkonstruktion vorgesehene Öffnung aneinander angrenzend angeordnet sind, und das Verbindungselement als Keil ausgeführt ist, der in der Wandung wenigstens einer der beiden Öffnungen verkeilbar ist. Der Keil kann auf schnelle und einfache Art und Weise bis zur Selbsthemmung in die Öffnungen eingebracht werden und stellt eine gute Verbindung zwischen Abscheidebehälter und Trägerkonstruktion sicher.

Es ist vorstellbar, dass die schräg verlaufenden Abschnitte des Behälterbodens auf der dem Abscheidebehälter-Innenraum zugewandten Seite im Wesentlichen etwa glattflächig und eben, insbesondere furchen- und unterbrechungsfrei, ausgebildet sind. Dies begünstigt und gewährleistet, dass der an den schrägen Abschnitten anfallende Sinkschlamm möglichst ungehindert abgleiten kann und der Abscheidebehälter mit nur geringen im Behälter verbleibenden Rückständen entleert werden kann.

Es ist denkbar, dass die Trägerkonstruktion zumindest abschnittsweise etwa keilförmig ausgebildet ist, wobei eine dem Abscheidebehälter zugewandte Fläche der Trägerkonstruktion etwa die gleiche Neigung aufweist wie die schrägen Abschnitte des Behälterbodens. Eine derartig ausgeführte Keilform stellt eine definierte Auflage- und Abstützfläche für den Abscheidebehälter bereit. So kann das Aufsetzen des Abscheidebehälters auf die Trägerkonstruktion erleichtert und ein sicherer Halt des aufgesetzten Abscheidebehälters auf der Trägerkonstruktion gewährleistet werden. Die Keilform gewährleistet außerdem, dass der in dem Abscheidebehälter befindliche Sinkschlamm gut abgleitet.

Möglicherweise kann ein zwischen den keilförmigen Abschnitten der Trägerkonstruktion liegender Teil eine Neigung aufweisen, welche etwa quer zu einer Längserstreckungsrichtung der schrägen Abschnitten der Trägerkonstruktion bzw. des Abscheidebehälters verlaufend ausgebildet ist. So kann der sich im Abscheidebehälter ansammelnde Sinkschlamm neben einer entlang der Neigung der schrägen Abschnitte verlaufenden Richtung zusätzlich in einer dazu quer verlaufenden Richtung abgleiten, so dass der Sinkschlamm gut zu einer bestimmten Stelle im Abscheidebehälter, vorzugsweise zu einem Schlammabzug, hingeleitet wird.

Es ist vorstellbar, dass die dem Abscheidebehälter zugewandte Fläche der Trägerkonstruktion und eine bodennah angeordnete Aufstellf läche der Trägerkonstruktion als Hohlprofil mit seitlich umlaufender Randbegrenzung ausgeführt sind, wobei sich von mindestens einer der beiden Flächen in den Hohlraum des Hohlprofils hineinragende Durchbrechungen erstrecken. Durch die Ausführung als Hohlprofil kann Material sowie Gewicht bei der Trägerkonstruktion eingespart werden, wobei durch die in den Hohlraum hineinragenden Durchbrechungen gleichzeitig eine stabile Ausführung der Trägerkonstruktion gewährleistet werden kann. Eine solche verstärkte Trägerkonstruktion kann die auf den Boden des Abscheidebehälters wirkenden Kräfte vorteilhaft aufnehmen.

Die der Trägerkonstruktion zugewandte Außenseite des Behälterbodens kann mindestens einen vorstehenden Abschnitt aufweisen, welcher mit einer in der Trägerkonstruktion vorgesehenen komplementären Aussparung in Eingriff bringbar ist. Es kann so ein Formschluss zwischen Abscheidebehälter und der Trägerkonstruktion hergestellt werden, welcher zur Zentrierung sowie Arretierung des Abscheidebehälters auf der Trägerkonstruktion dienen kann.

Die Trägerkonstruktion kann beispielsweise mehrteilig oder bevorzugt einstückig ausgebildet sein, und die Trägerkonstruktion kann außerdem eine Aussparung für den Schlammabzug aufweisen. Eine einstückige Ausführungsform der Trägerkonstruktion ist aufgrund der begrenzten Abmessungen insbesondere bei kleinvolumigen Abscheidebehältern vorteilhaft. Eine mehrteilige Ausführungsform der Trägerkonstruktion lässt sich hingegen einfach für verschiedene Ausbildungen von Abscheidebehältern konfigurieren. Außerdem sorgt eine Aussparung für den Schlammabzug in der Trägerkonstruktion dafür, dass der Schlammabzug vorzugsweise an einem tiefsten Punkt am Abscheidebehälter angebracht werden kann.

Möglicherweise kann die Trägerkonstruktion etwa die Hälfte des Behälterbodens, bevorzugt etwa dreiviertel des Behälterbodens, und besonders bevorzugt nahezu vollständig den Behälterboden bedecken. Je nach Volumen des Abscheidebehälters und dem somit auf den Behälterboden wirkenden Druck können die dabei entstehenden Kräfte gezielt von der Trägerkonstruktion aufgenommen und möglichst gleichmäßig über den Behälterboden verteilt werden.

In einer Ausführungsform der Erfindung kann der Abscheidebehälter eine sich etwa länglich erstreckende Form aufweisen, wobei beide Endbereiche des Abscheidebehälters quer zur Längserstreckungsrichtung jeweils einen breiteren Querschnitt aufweisen, als der Querschnitt eines zwischen den beiden Endbereichen befindlichen Mittelteils, wobei der Abscheidebehälter bevorzugt im Bereich des Schlammabzugs einen geringsten Querschnitt aufweist. Diese etwa zweiseitig keulenartige Ausbildung des Abscheidebehälters ermöglicht eine etwa trichterartige Funktion beim Abgleiten des Sinkschlamms, so dass dieser von beiden Endbereichen aus gut zu einer bestimmten Position, bevorzugt zu dem Schlammabzug hin, abgleitet.

Es wird vorgeschlagen, dass die lichte Weite zwischen zwei Längswänden eines Endbereichs größer ist, als eine quer dazu verlaufende lichte Weite zwischen einem ersten Übergangsabschnitt einer dieser Längswände zu einer daran anschließenden Querwand des Endbereichs und einem zweiten Übergangsabschnitt der gegenüberliegenden Längswand des Endbereichs zu dem daran anschließenden Mittelteil. Eine solche geometrische Anordnung des Mittelteils bezüglich eines Endbereichs des Abscheidebehälters stellt sicher, dass der in den Endbereichen anfallende Sinkschlamm möglichst vollständig in Richtung des Mittelteils abgleitet. Darüber hinaus ermöglicht diese geometrische Anordnung eine vereinfachte Transportierbarkeit der Abscheideanlage.

Es ist vorstellbar, dass die Trägerkonstruktion eine Kontur aufweist, welche etwa die gleiche Form wie die Kontur des Abscheidebehälters besitzt. So ergibt sich trotz der separaten Ausführung von Trägerkonstruktion und Abscheidebehälter eine gute Passform der beiden Teile zueinander. Dies wiederum führt zu einer guten Abstützung des Behälterbodens durch die Trägerkonstruktion.

Möglicherweise kann im Bereich wenigstens eines Endbereichs des Abscheidebehälters auf dessen Oberseite wenigstens eine Öffnung zum Inspizieren des Abscheidebehälter-Innenraums vorgesehen sein, welche gegenüber der Horizontalen geneigt angeordnet ist. Aufgrund der schrägen Anordnung der Öffnungen können die schrägen Abschnitte des Behälterbodens in einem weiten Betrachtungswinkel sowohl in den Endbereichen, als auch im Bereich des Mittelteils inspiziert werden.

Es wird vorgeschlagen, dass der Mittelteil des Abscheidebehälters und/oder der Trägerkonstruktion eine Aussparung zum Aufnehmen von Leitungen und Aggregaten bildet. In dieser Aussparung können die zum Betrieb der Abscheideanlage nötigen Aggregate und/oder Leitungen platzsparend an der Abscheideanlage angeordnet werden.

Es ist denkbar, dass die von dem Abscheidebehälter entfernest liegende Kontur der in der Aussparung angeordneten Leitungen und Aggregate zusammen mit dem Mittelteil einen gemeinsamen Querschnitt aufweist, welche etwa dem größten Querschnitt der Endbereiche entspricht. Die im Mittelteil angeordneten Aggregate und Leitungen können so etwa fluchtend mit der äußeren Kontur der Endbereiche ausgerichtet werden.

Es ist vorstellbar, dass die in der Aussparung anordenbaren Leitungen einstückig ausgebildete Gewebeschläuche sind. So können die Leitungen flexibel verlegt werden und der Form des Abscheidebehälters bzw. der Trägerkonstruktion angepasst werden.

Möglicherweise kann eine umlaufende Abdeckung um die Trägerkonstruktion und/oder den Abscheidebehälter herum anordenbar sein, deren Innenmaß etwa das Maß des den größten Querschnitt aufweisenden Bereichs der Abscheideanlage aufweist. Eine derartige Abdeckung sorgt neben einem Schutz der Aggregate und Leitungen außerdem für einen Schutz vor unbeabsichtigtem oder unberechtigtem Entfernen des Abscheidebehälters von der separat ausgeführten Trägerkonstruktion.

Eine mögliche Ausführungsform der Erfindung wird anhand der Zeichnungen erläutert. Es zeigen:
- Figur 1: eine Frontansicht der als separaten Teile ausgeführten Trägerkonstruktion und des Abscheidebehälters einer erfindungsgemäßen Abscheideanlage,
- Figur 2: eine perspektivische Längsschnitt-Ansicht einer erfindungsgemäßen Abscheideanlage, wobei deren Abscheidebehälter mit der Trägerkonstruktion verbunden ist,
- Figur 3: eine Perspektivdarstellung einer Trägerkonstruktion einer erfindungsgemäßen Abscheideanlage,
- Figur 4: einen vergrößerten Ausschnitt aus der in Figur 2 dargestellten Längsschnitt-Ansicht eines erfindungsgemäßen Schnellverschlusses,
- Figur 5: den Schnellverschluss aus Figur 4 mit eingesetztem Verbindungselement,
- Figur 6: eine Draufsicht einer erfindungsgemäßen Abscheideanlage,
- Figur 7: eine weitere Draufsicht der Abscheideanlage aus Figur 6,
- Figur 8: eine Perspektivansicht einer erfindungsgemäßen Abscheideanlage mit im Mittelteil angeordneten Leitungen und Aggregaten,
- Figur 9: einen Ausschnitt einer Frontansicht der Oberseite einer Abscheideanlage mit integriertem Deckelhalter, und
- Figur 10: eine Draufsicht der Abscheideanlage aus Figur 8.

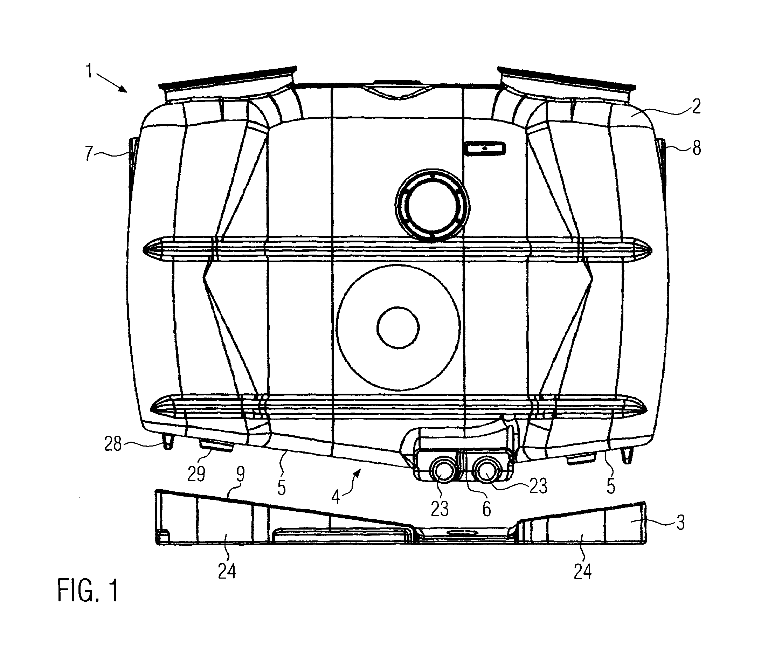

Figur 1 zeigt eine erfindungsgemäße Abscheideanlage 1 mit einem Abscheidebehälter 2 und einer separat davon ausgeführten Trägerkonstruktion 3. Der Abscheidebehälter 2 weist auf dessen Unterseite einen Boden 4 auf, welcher zumindest abschnittsweise, das heißt mit den schrägen Abschnitten 5, zu einem Schlammabzug 6 hin schräg verlaufend ausgebildet ist.

Im Betrieb der Abscheideanlage 1 fließt durch einen der Zu- bzw. Abläufe 7, 8 das zu reinigende Abwasser in den Abscheidebehälter 2 ein. Im Abwasser befindliche Sinkstoffe, deren Dichte höher ist als die Dichte des Abwassers, sinken in dem Abscheidebehälter 2 zu Boden. Die Sinkstoffe setzen sich auf den schrägen Flächen 5 des Bodens 4 innerhalb des Abscheidebehälters 2 ab und gleiten entlang dieser Schräge in Richtung des Schlammfangs 6 ab.

Derartige Abscheideanlagen 1 können außerhalb von Gebäuden in einer in das Erdreich eingebrachten Aushebung, oder innerhalb von Gebäuden, vorzugsweise in Kellerräumen aufgestellt werden. Die Trägerkonstruktion 3 dient zum Aufstellen des Abscheidebehälters 2 an einem beliebigen Aufstellort. Hierfür wird der Abscheidebehälter 2 von oben in die Trägerkonstruktion 3 eingesetzt. Der Boden 4 des Abscheidebehälters 2 kommt dabei mit der Oberseite 9 der Trägerkonstruktion 3 zur Anlage. In dieser Ausführungsform ist die Trägerkonstruktion 3 demnach am behälteraußenseitigen Bereich des Bodens 4 des Abscheidebehälters 2 anbringbar.

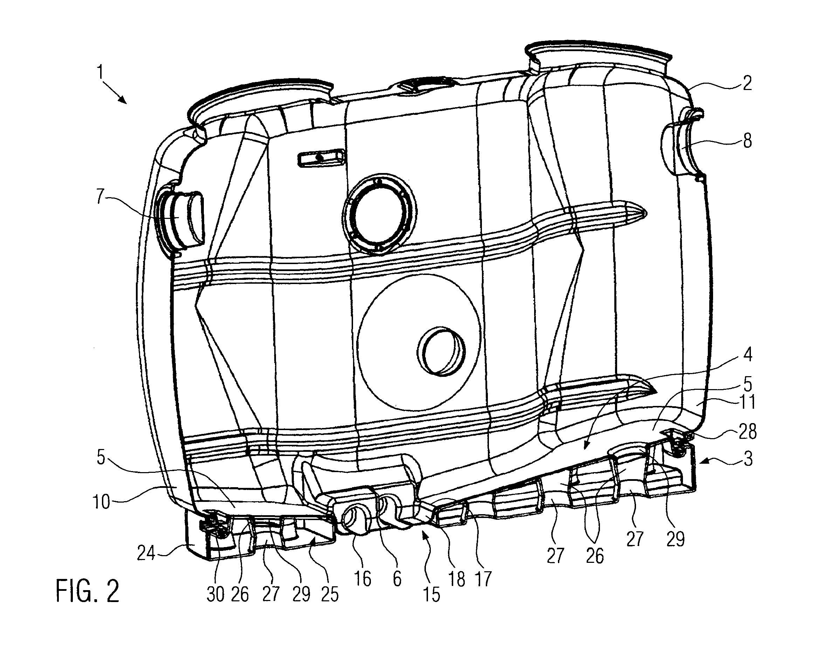

Figur 2 zeigt einen Längsschnitt durch die Abscheideanlage 1, bei dem der Abscheidebehälter 2 auf der separat davon ausgeführten Trägerkonstruktion 3 aufgesetzt ist. Die behälterinnenseitig angeordneten schräg verlaufenden Abschnitte 5 des Behälterbodens 4 sind im Wesentlichen etwa glattflächig und eben, insbesondere furchen- und unterbrechungsfrei, ausgebildet. Wie in Figur 2 zu erkennen ist, verlaufen die schrägen Abschnitte 5 des Behälterbodens 4 von einem seitlichen Endbereich 10, 11 des Abscheidebehälters 2 abfallend zu dem Schlammabzug 6 hin, der sich zwischen zwei schrägen Abschnitten 5 befindet.

Die schrägen Abschnitte 5 des Behälterbodens 4 bilden behälteraußenseitig eine Anlagefläche, welche mit der Oberseite 9 der Trägerkonstruktion 3 zur Anlage kommt.

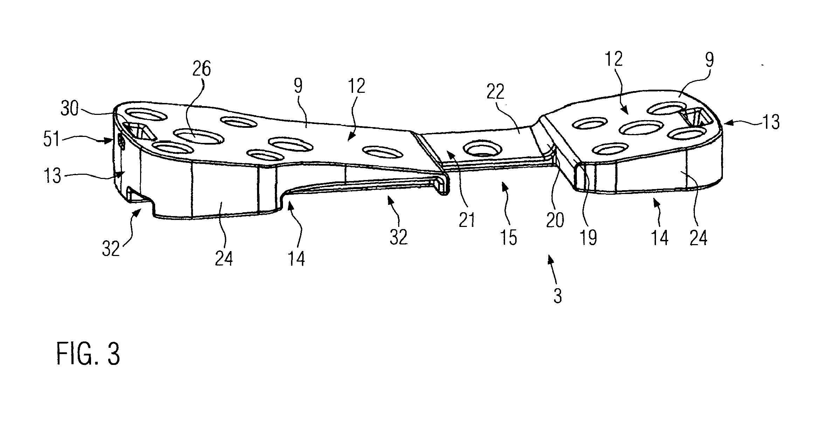

Wie unter anderem in Figur 3 ersichtlich ist, weist die Trägerkonstruktion 3 keilförmige Abschnitte 12 auf. Die abgebildeten zwei keilförmigen Abschnitte 12 weisen jeweils eine Oberseite mit einer Neigung auf, welche von einem seitlichen Endbereich 13 zu dem jeweils gegenüberliegenden keilförmigen Abschnitt 12 hin abfallend verläuft. Die als Aufstellfläche dienende bodennahe Unterseite 14 der Trägerkonstruktion 3 verläuft im Wesentlichen parallel zum Boden des Aufstellortes. Die Neigung der keilförmigen Abschnitte 12 entspricht somit dem Winkel zwischen der etwa parallel zum Boden des Aufstellortes verlaufenden Aufstellfläche 14 und der Oberseite 9 der Trägerkonstruktion 3.

Insbesondere in Figur 2 ist zu erkennen, dass die keilförmigen Abschnitte 12 der Trägerkonstruktion 3 etwa die gleiche Neigung aufweisen wie die schrägen Abschnitte 5 des Behälterbodens 4. Zwischen den beiden keilförmigen Abschnitten 12 der Trägerkonstruktion 3 befindet sich eine Aussparung 15, in welcher der Schlammabzug 6 Platz findet.

Die Unterseite 16 des Schlammabzugs 6 liegt etwas tiefer als die Unterkante 17 der schrägen Abschnitte 5 des Behälterbodens 4. Die Unterseite 16 des Schlammabzugs 6 ist mit der Unterkante 17 der schrägen Abschnitte 5 des Behälterbodens 4 über eine Verbindungswandung 18 verbunden. Die Unterkante 17 bildet den Übergang von den schrägen Abschnitten 5 zu dem die Verbindungswandung 18 aufweisenden Schlammabzug 6. In diesem Ausführungsbeispiel bildet der Schlammabzug 6 den tiefsten Punkt des Abscheidebehälters 2. Die Unterseite 16 des Schlammabzugs 6 weist zudem eine Neigung auf, welche quer zu dem Neigungsverlauf der schrägen Abschnitte 5 des Behälterbodens 4 verläuft. In diesem Ausführungsbeispiel verläuft die Neigung etwa orthogonal zu dem Neigungsverlauf der schrägen Abschnitte 5 des Behälterbodens 4.

Mit Bezug auf Figur 3 weist die Trägerkonstruktion 3 zwischen den keilförmigen Abschnitten 12 ein Verbindungselement 21 auf. Das Verbindungselement 21 weist eine Oberseite 22 mit einer Neigung auf, welche etwa quer zu der Neigung der keilförmigen Abschnitte 12 verlaufend ausgebildet ist. In diesem Ausführungsbeispiel verläuft die Neigung des Verbindungselements 21 etwa orthogonal zu der Neigung der keilförmigen Abschnitte 12. Das Verbindungselement 21 ist über einen gewölbten Abschnitt 20 an den keilförmigen Abschnitten 12 verbunden und bildet mit einer Endkante 19 der keilförmigen Abschnitte 12 einen etwa stufenlosen durchgehenden Übergang.

Beim Aufsetzen des Abscheidebehälters 2 auf die Trägerkonstruktion 3 findet der Schlammabzug 6 in der Aussparung 15 der Trägerkonstruktion 3 Platz. Zumindest abschnittsweise liegt die Unterkante 17 der schrägen Abschnitte 5 des Behälterbodens 4 behälteraußenseitig an der Endkante 19 der Trägerkonstruktion 3 an. Zumindest abschnittsweise liegt die Verbindungswandung 18 behälteraußenseitig an dem gewölbten Abschnitt 20 der Trägerkonstruktion 2 an. Zumindest abschnittsweise liegt die Unterseite 16 des Schlammabzugs 6 behälteraußenseitig an der Oberseite 22 des Verbindungselements 21 an, wobei die Neigung des Verbindungselements 21 ungefähr mit der Neigung der Unterseite 16 des Schlammabzugs 6 übereinstimmt.

Ungefähr in einem Bereich zwischen den keilförmigen Abschnitten 12, der nicht über das Verbindungselement 21 verbunden ist, befinden sich die Anschlussstutzen 23 des Schlammabzugs 6. Die zuvor diskutierten unterschiedlichen Neigungen haben zur Folge, dass der in dem Abscheidebehälter 2 absinkende Schlamm an den schrägen Abschnitten 5 des Behälterbodens 4 in Richtung des Schlammabzug 6 abgleitet und dort dann entlang der Neigung des Verbindungselements 21 zu den Anschlussstutzen 23 des Schlammabzugs 6 abgleitet.

Bezüglich der Trägerkonstruktion 3 ist in der in Figur 2 dargestellten Schnittansicht der Abscheideanlage 1 zu erkennen, dass die Trägerkonstruktion 3 als Hohlprofil ausgebildet ist. Sowohl in Figur 2 als auch in Figur 3 ist zu erkennen, dass sich dieses Hohlprofil aus der Oberseite 9 und der Aufstellfläche 14 der Trägerkonstruktion 3, welche von einer seitlich umlaufenden Wandung 24 als Randbegrenzung eingefasst sind, zusammensetzt. Zwischen der Oberseite 9 und der Aufstellfläche 14 befindet sich ein Hohlraum 25.

Die Oberseite 9 der Trägerkonstruktion 3 weist in den Hohlraum 25 hineinragende Durchbrechungen 26 auf. Im vorliegenden Ausführungsbeispiel weist zusätzlich die Aufstellfläche 14 in den Hohlraum 25 hineinragende Durchbrechungen 27 auf. Die offenen Enden der Durchbrechungen 26, 27 sind einander gegenüberliegend und aneinander anliegend angeordnet.

Die Durchbrechungen 26, 27 dienen unter anderem der Versteifung der Trägerkonstruktion 3, insbesondere der Oberseite 9 der Trägerkonstruktion 3, auf welcher der Abscheidebehälter 2 mit dessen Boden 4 aufliegt. Um eine über die Trägerkonstruktion 3 zu erreichende Verstärkung bzw. Versteifung des Behälterbodens 4 zu ermöglichen, bedeckt die Trägerkonstruktion 3 erfindungsgemäß etwa die Hälfte des Behälterbodens 4, bevorzugt etwa dreiviertel des Behälterbodens 4 und besonders bevorzugt nahezu vollständig den Behälterboden 4. So wird eine möglichst große Auflagefläche zwischen der Oberseite 9 der Trägerkonstruktion 3 und der behälteraußenseitigen Fläche des Behälterbodens 4 gewährleistet.

Wie unter anderem in Figur 1 zu sehen, weist die behälteraußenseitige Fläche des Behälterbodens 4 außerdem mehrere vorstehende Abschnitte, unter anderem einen Abschnitt 28 mit etwa rechteckigem Querschnitt und einen Abschnitt 29 mit etwa rundem Querschnitt auf.

Die Oberseite 9 der Trägerkonstruktion 3 weist mehrere Durchbrechungen 26 mit etwa rundem Querschnitt auf. Diese sind komplementär zu den vorstehenden etwa runden Abschnitten 29 ausgebildet. Das heißt, beim Aufsetzen des Abscheidebehälters 2 auf die Trägerkonstruktion 3 greift der vorstehende Abschnitt 29 in die dazu komplementäre Aussparung 26 ein. Der Abscheidebehälter 2 kann so auf der Trägerkonstruktion 3 fixiert und/oder arretiert werden.

Die vorstehenden Abschnitte 28 mit etwa rechteckigem Querschnitt gelangen beim Aufsetzen des Abscheidebehälters 2 auf die Trägerkonstruktion 3 mit den in der Oberseite 9 der Trägerkonstruktion 3 ausgebildeten etwa rechteckigen Aussparungen 30 in Eingriff. Auch dies kann zur Arretierung und/oder Zentrierung des Abscheidebehälters 2 auf der Trägerkonstruktion 3 genutzt werden.

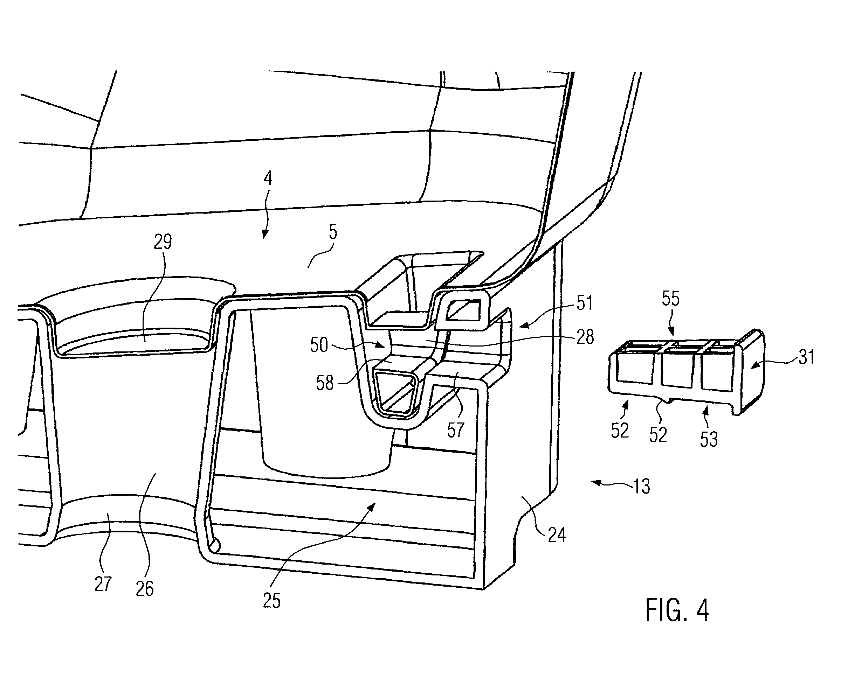

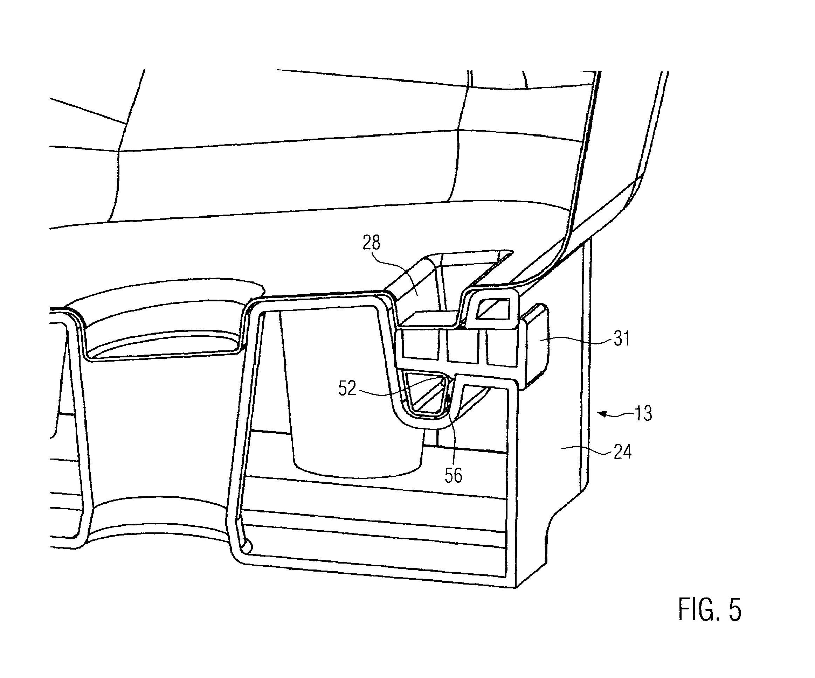

Der vorstehende Abschnitt 28 bildet außerdem zusammen mit der komplementären Aussparung 30 einen Teil eines Schnellverschlusses, welcher in den Figuren 4 und 5 näher dargestellt ist. Der vorstehende Abschnitt 28 weist eine Ausnehmung 50 auf. Die seitlich umlaufende Wandung 24 der Trägerkonstruktion 3 weist im Bereich des seitlichen Endbereichs 13 ebenfalls eine Ausnehmung 51 auf. Wenn der Abscheidebehälter 2 auf der Trägerkonstruktion 3 aufgesetzt und korrekt ausgerichtet ist, befinden sich die beiden Ausnehmungen 50, 51 etwa auf gleicher Höhe und grenzen aneinander an.

Die beiden aneinander angrenzenden Ausnehmungen 50, 51 bilden zusammen eine Aufnahme für ein darin einbringbares Verbindungselement 31. Im vorliegenden Ausführungsbeispiel ist das Verbindungselement 31 ein Keil. Der äußere Umfang des Keils 31 ist größer als der innere Umfang der Aufnahme 50, 51 der Trägerkonstruktion 3. So kann sich der von außen in die Aufnahme 50, 51 eingetriebene Keil 31 in der Aufnahme 50, 51 verkeilen und den Abscheidebehälter 2 an der Trägerkonstruktion 3 festlegen.

Um die Keilwirkung möglichst gut zu ermöglichen, kann die der Oberseite 55 des Keils 31 gegenüberliegend angeordnete Fläche der Ausnehmung 50, 51 etwa die gleiche Neigung aufweisen wie die Oberseite 55 des Keils 31, und die der Unterseite 53, 54 des Keils 31 gegenüberliegend angeordnete Fläche 57, 58 der Ausnehmung 50, 51 kann etwa die gleiche Neigung aufweisen wie die Unterseite 53, 54 des Keils 31. Die Keilwirkung kann so ausgelegt werden, dass das Eintreiben des Keils 31 wahlweise mit Werkzeug oder werkzeuglos erfolgen kann.

Unabhängig von einer Keilwirkung kann das Verbindungselement 31 auf dessen Oberseite 55 und/oder auf dessen Unterseite 53, 54 eine Rastnase 52 aufweisen. Wenn das Verbindungselement 31 in die Ausnehmung 50, 51 der Trägerkonstruktion 3 eingetrieben wird, rastet die Rastnase 52 in einem zwischen dem vorstehenden Abschnitt 28 und der etwa rechteckigen Aussparung 30 gebildeten Spalt 56 ein. Das Verbindungselement 31 kann so gegen ein Herausfallen oder Lösen gesichert werden. Außerdem kann das Verbindungselement 31 mit der Rastnase 52 so an einer bestimmten Stelle verriegelt werden.

Es ist vorstellbar, dass die Rastnase 52 mit einem, hier nicht dargestellten, Federmechanismus ausgestattet ist und eine Art Sperrklinke bildet. Beim Einschieben des Verbindungselements 31 klappt die Rastnase 52 gegen die Federvorspannung nach innen und legt sich an der Oberseite 55 bzw. Unterseite 53, 54 des Verbindungselements 31 an. Sobald die Rastnase 52 den Spalt 56 passiert, drückt die Feder die Rastnase 52 nach außen, so dass die Rastnase 52 in dem Spalt 56 einrastet und das Verbindungselement 31 so in der Aufnahme 50, 51 fixiert.

Die Abscheideanlage 1 kann entweder nach der Herstellung der Einzelteile (Abscheidebehälter 2, Trägerkonstruktion 3, Verbindungselement 31) in der Fabrik, oder nach erfolgter Auslieferung am Einbauort zusammengesetzt werden. Aufgrund des Schnellverschlusses geschieht der Zusammenbau schnell und einfach. Insbesondere im Fall des Zusammenbaus am Einbauort kann der Monteur so auf zeitintensive Verschraubungen verzichten.

Bezüglich der allgemeinen Form und Ausgestaltung der Trägerkonstruktion ist es auch vorstellbar, dass die Oberseite 9 der Trägerkonstruktion 3 neben den etwa runden und etwa rechteckigen Durchbrechungen bzw. Aussparungen 26, 30 weitere Aussparungen aufweist, die lediglich als Löcher in der Oberseite 9 vorgesehen sind, deren offene Enden nicht mit einer gegenüberliegend angeordneten, in der Aufstellfläche 14 vorgesehenen Durchbrechung 27 zur Anlage kommen.

In Figur 2 ist außerdem zu erkennen, dass die an der Behälteraußenseite des Behälterbodens 4 vorgesehenen vorstehenden Abschnitte 28, 29 verschieden ausgeführt sein können. Wie in der linken Bildhälfte der Figur 2 zu sehen ist, sind die vorstehenden Abschnitte 28, 29 behälteraußenseitig an dem Behälterboden 4 angebracht. Die in der rechten Bildhälfte dargestellten vorstehenden Abschnitte 28, 29 sind durch den Behälterboden 4 nach außen hindurchtretend in diesen eingeformt.

Die in Figur 3 dargestellte Trägerkonstruktion 3 ist einstückig ausgebildet, das heißt die beiden keilförmigen Abschnitte 12 sind über das integral damit ausgeformte Verbindungselement 21 miteinander verbunden. Es ist jedoch auch eine mehrteilige Ausführungsform der Trägerkonstruktion 3 denkbar, in welcher beispielsweise das Verbindungselement 21 nicht vorhanden ist, oder aber separat von den keilförmigen Abschnitten 12 herstellbar und nachträglich an diesen anbringbar ist. Die Trägerkonstruktion 3 kann außerdem Ausnehmungen 32 aufweisen, welche dergestalt sind, dass die Gabel eines Gabelstaplers dort eingreifen kann.

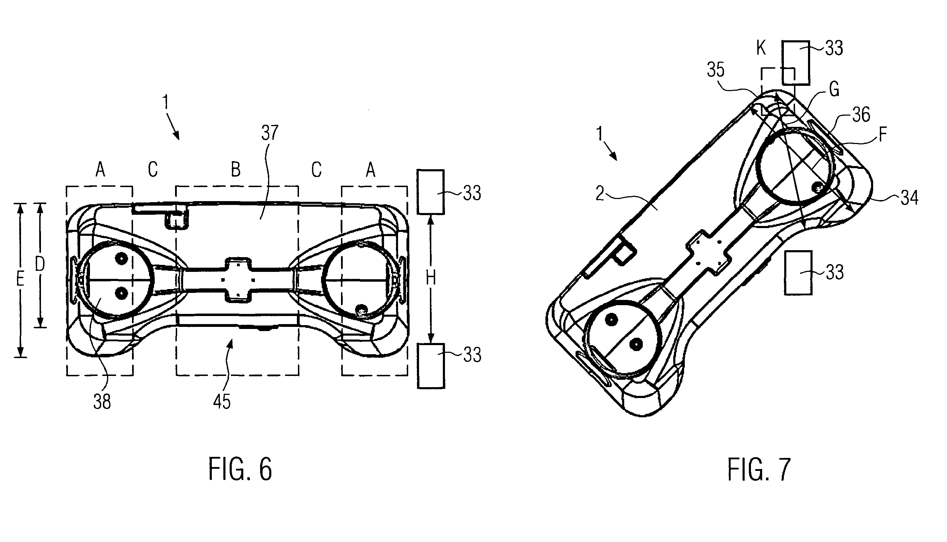

Figur 6 zeigt die Abscheideanlage 1 in einer Draufsicht. Es ist zu erkennen, dass der Abscheidebehälter 2 eine sich etwa länglich erstreckende Form aufweist. Der Abscheidebehälter 2 weist zwei Endbereiche A sowie einen dazwischen liegenden Mittelteil B auf. Zwischen dem Mittelteil B und den beiden Endbereichen A befindet sich ein Übergangsabschnitt C.

Beide Endbereiche A des Abscheidebehälters 2 weisen quer zur Längserstreckungsrichtung einen Querschnitt E auf. Der Mittelteil B weist einen Querschnitt D auf. Der Querschnitt E der beiden Endbereiche A ist größer als der Querschnitt D des Mittelteils B. In anderen Worten heißt dies, dass der Behälter 2 an den Endbereichen A breiter ist als im mittleren Bereich B.

Figur 6 zeigt außerdem einen angedeuteten Türrahmen 33 im Querschnitt in einer Draufsicht. Zwischen den Türzargen besteht ein lichter Abstand H. Dieser lichte Abstand H kann größer sein als der Querschnitt D des Mittelteils B. In dem in Figur 4 gezeigten Beispiel ist dies zwar der Fall, jedoch ist der lichte Abstand H kleiner als der Querschnitt E der Endbereiche A. Die Abscheideanlage 1 würde so nicht durch die Türe 33 passen.

In Figur 7 ist dieselbe Abscheideanlage 1 in einer gedrehten Position abgebildet. Der Endbereich A weist eine lichte Weite F auf, die sich zwischen zwei Längswänden 34, 35 des Endbereichs A des Abscheidebehälters 2 erstreckt. Zwischen einem ersten Übergangsabschnitt K der Längswand 35 zu einer daran anschließenden Querwand 36 und einem zweiten Übergangsabschnitt C (siehe Figur 6) der gegenüberliegenden Längswand 34 zu dem daran anschließenden Mittelteil B erstreckt sich eine lichte Weite G.

Die lichte Weite G verläuft quer zu der lichten Weite F. Die lichte Weite F ist größer als die lichte Weite G. Gleichzeitig ist die lichte Weite G kleiner als die lichte Weite H des Türrahmens 33. Somit passt der Abscheidebehälter 2 in der in Figur 7 abgebildeten Position durch den Türrahmen 33.

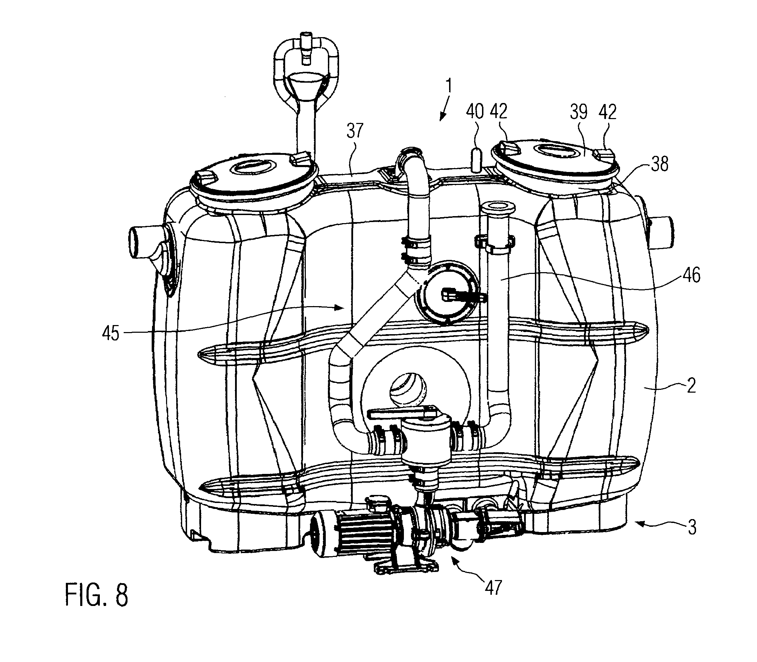

Auf der in den Figuren 6 und 7 zu erkennenden Oberseite 37 des Abscheidebehälters 2 ist im Bereich des Endbereichs A eine Öffnung 38 zum Inspizieren des Innenraums des Abscheidebehälters 2 vorgesehen. In der in Figur 8 gezeigten Perspektivansicht der Abscheideanlage 1 ist zu erkennen, dass die auf der Oberseite 37 des Abscheidebehälters 2 vorgesehene Öffnung 38 gegenüber der Horizontalen geneigt angeordnet ist. Als Horizontale kann auch der Wasserspiegel des in dem Behälter 2 befindlichen Abwassers verstanden werden. Die Öffnung 38 ist mit einem Deckel 39 verschlossen.

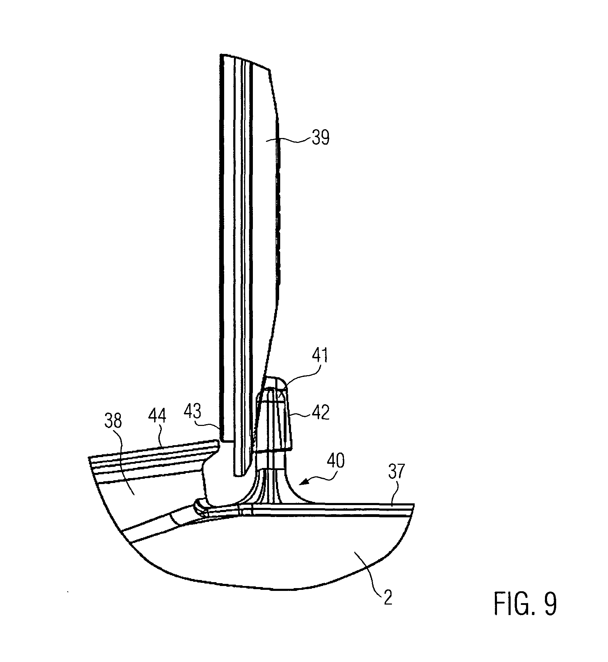

Auf der Oberseite 37 des Abscheidebehälters 2 ist in der Nähe der Öffnung 38 eine Haltevorrichtung 40 für den Deckel 39 vorgesehen. In Figur 9 ist diese Haltevorrichtung 40 detailliert abgebildet. Auf der Oberseite 37 des Abscheidebehälters 2 befindet sich ein Dorn 41. Der Deckel 39 weist mindestens eine Tasche 42 auf. Nach dem Abnehmen des Deckels 39 von der Öffnung 38 kann dieser, wie in Figur 9 dargestellt, mit der Tasche 42 auf den Dorn 41 aufgeschoben werden. Der Kragen 43 des Deckels 39 kann den Kragen 44 der Öffnung 37 überlappen. So kann sichergestellt werden, dass von der Innenseite des Deckels 39 abtropfendes Abwasser über den Kragen 43 in die Öffnung 37 einfließt.

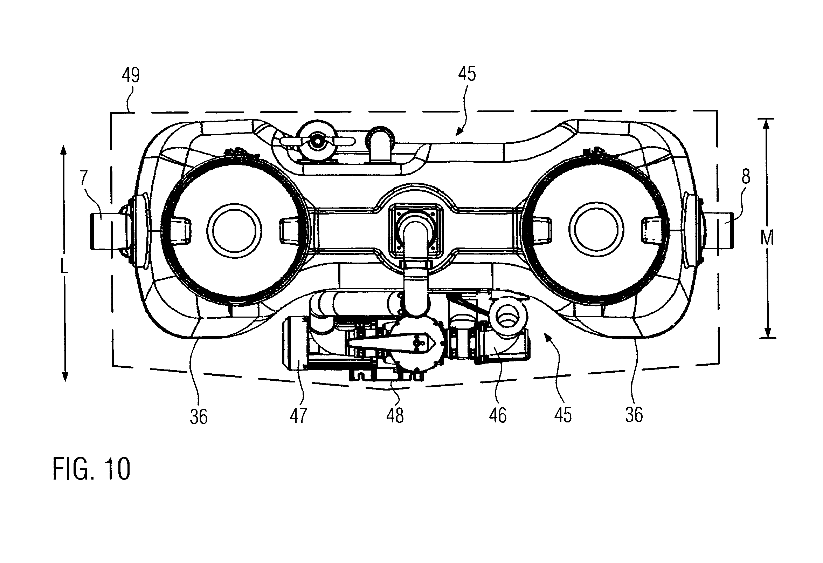

In der in Figur 8 gezeigten Perspektivdarstellung der Abscheideanlage 1 ist außerdem gut zu erkennen, dass die Trägerkonstruktion 3 eine Kontur aufweist, welche etwa die gleiche Form wie die Kontur des Abscheidebehälters 2 besitzt. Das heißt, auch die Trägerkonstruktion 3 weist zwei Endbereiche auf, die einen größeren Querschnitt besitzen als ein dazwischen angeordnetes Mittelteil. Dementsprechend bildet das Mittelteil C des Abscheidebehälters 2 sowie das Mittelteil der Trägerkonstruktion 3 eine Aussparung 45 (siehe auch Figuren 6 und 10) zum Aufnehmen von Leitungen 46 und Aggregaten 47.

In Figur 10 ist zu sehen, dass eine entferntest liegende Kontur 48 der in der Aussparung 45 angeordneten Leitungen 46 und Aggregate 47 zusammen mit dem Mittelteil C einen gemeinsamen Querschnitt L aufweist, welcher etwa dem größten Querschnitt M der Endbereiche A entspricht. Dies bedeutet, die Leitungen 46 und Aggregate 47 können platzsparend und in etwa fluchtend mit den vorderen Querwänden 36 der Endbereiche A an dem Abscheidebehälter 2 angeordnet werden.

Die in der Aussparung 45 anordenbaren Leitungen 46 sind bevorzugt einstückig ausgebildete Gewebeschläuche, das heißt flexible Gummischläuche mit eingearbeiteter Gewebestruktur. Im Gegensatz zu starren Metall- oder Kunststoffrohren können mit flexiblen Gewebeschläuchen Montagetoleranzen aufgenommen werden und ein spannungsfreier Betrieb gewährleistet werden. Außerdem können Abscheideanlagen 1 auf einfache Weise nachträglich aufgerüstet werden.

In Figur 10 ist außerdem eine Abdeckung 49 strichliniert dargestellt. Es ist denkbar, dass diese Abdeckung 49 als eine umlaufende Abdeckung um die Trägerkonstruktion 3 und/oder die Aggregate 47 und Leitungen 46 und/oder zumindest einen Teil des Abscheidebehälters 2 anordenbar ist. Es ist außerdem denkbar, dass mit entsprechenden Ausschnitten der Abdeckung 49 im Bereich der Zu- bzw. Ausläufe 7, 8 eine Abdeckung 49 von oben auf den Abscheidebehälter 2 aufsetzbar ist und die gesamte Abscheideanlage 1 einschließlich deren Oberseite 37 bis hinunter zur Aufstellfläche 14 bzw. zum Boden bedeckt.

## Patentansprüche

1. Abscheideanlage (1), insbesondere Fettabscheideanlage, welche einen Abscheidebehälter (2) und eine Trägerkonstruktion (3) zum Aufstellen des Abscheidebehälters (2) aufweist, wobei die Trägerkonstruktion (3) und der Abscheidebehälter (2) separat voneinander ausgeführt sind, und der Boden (4) des Abscheidebehälters (2) zumindest abschnittsweise zu einem Schlammabzug (6) hin schräg verlaufend ausgebildet ist,
**dadurch gekennzeichnet,**
**dass** die Trägerkonstruktion (3) mit einem Schnellverschluss (31, 50, 51) an dem Boden (4) des Abscheidebehälters (2) anbringbar ist.

2. Abscheideanlage (1) nach Anspruch 1,
**dadurch gekennzeichnet,**
**dass** der Schnellverschluss ein Verbindungselement (31) zum Verbinden des Abscheidebehälters (2) mit der Trägerkonstruktion (3) aufweist, wobei das Verbindungselement (31) in eine in dem Abscheidebehälter (2) vorgesehene Öffnung (50) und in eine in der Trägerkonstruktion (3) vorgesehene Öffnung (51) einführbar ist.

3. Abscheideanlage (1) nach Anspruch 1 oder 2,
**dadurch gekennzeichnet,**
**dass** der Schnellverschluss als eine Rastverbindung ausgeführt ist, wobei das Verbindungselement (31) eine Rastnase (52) aufweist.

4. Abscheideanlage (1) nach Anspruch 3,
**dadurch gekennzeichnet,**
**dass** die Rastnase (52) in einem zwischen dem Abscheidebehälter (2) und der Trägerkonstruktion (3) vorgesehenen Spalt (56) einrastet.

5. Abscheideanlage (1) nach einem der vorhergehenden Ansprüche,
**dadurch gekennzeichnet,**
**dass** die in dem Abscheidebehälter (2) vorgesehene Öffnung (50) und die in der Trägerkonstruktion (3) vorgesehene Öffnung (51) aneinander angrenzend angeordnet sind, und das Verbindungselement (31) als Keil ausgeführt ist, der in einer Wandung (57, 58) wenigstens einer der beiden Öffnungen (50, 51) verkeilbar ist.

6. Abscheideanlage (1) nach Anspruch 1,
**dadurch gekennzeichnet,**
**dass** die schräg verlaufenden Abschnitte (5) des Behälterbodens (4) auf der dem Abscheidebehälter-Innenraum zugewandten Seite im Wesentlichen etwa glattflächig und eben, insbesondere furchen- und unterbrechungsfrei, ausgebildet sind.

7. Abscheideanlage (1) nach einem der vorhergehenden Ansprüche,
**dadurch gekennzeichnet,**
**dass** die Trägerkonstruktion (3) zumindest abschnittsweise etwa keilförmig ausgebildet ist, wobei eine dem Abscheidebehälter zugewandte Fläche (9) der Trägerkonstruktion (3) etwa die gleiche Neigung aufweist wie die schrägen Abschnitte (5) des Behälterbodens (4).

8. Abscheideanlage (1) nach Anspruch 7,
**dadurch gekennzeichnet,**
**dass** ein zwischen den keilförmigen Abschnitten (12) der Trägerkonstruktion (3) liegender Teil (21) eine Neigung aufweist, welche etwa quer zu einer Längserstreckungsrichtung der schrägen Abschnitte (12, 5) der Trägerkonstruktion (3) beziehungsweise des Abscheidebehälters (2) verlaufend ausgebildet ist.

9. Abscheideanlage (1) nach einem der vorhergehenden Ansprüche,
**dadurch gekennzeichnet,**
**dass** die dem Abscheidebehälter (2) zugewandte Fläche (9) der Trägerkonstruktion (3) und eine bodennah angeordnete Aufstellfläche (14) der Trägerkonstruktion (3) als Hohlprofil mit seitlich umlaufender Randbegrenzung (24) ausgeführt sind, wobei sich von mindestens einer der beiden Flächen (9, 14) in den Hohlraum (25) des Hohlprofils hineinragende Durchbrechungen (26, 27) erstrecken.

10. Abscheideanlage (1) nach einem der vorhergehenden Ansprüche,
**dadurch gekennzeichnet,**
**dass** die der Trägerkonstruktion (3) zugewandte Außenseite des Behälterbodens (4) mindestens einen vorstehenden Abschnitt (28, 29) aufweist, welcher mit einer in der Trägerkonstruktion (3) vorgesehenen komplementären Aussparung (30, 31) in Eingriff bringbar ist.

11. Abscheideanlage (1) nach einem der vorhergehenden Ansprüche,
**dadurch gekennzeichnet,**
**dass** die Trägerkonstruktion (3) mehrteilig oder bevorzugt einstückig ausgebildet ist, und die Trägerkonstruktion (3) eine Aussparung (15) für den Schlammabzug (6) aufweist.

12. Abscheideanlage (1) nach einem der vorhergehenden Ansprüche,
**dadurch gekennzeichnet,**
**dass** die Trägerkonstruktion (3) etwa die Hälfte des Behälterbodens (4), bevorzugt etwa dreiviertel des Behälterbodens (4), und besonders bevorzugt nahezu vollständig den Behälterboden (4) bedeckt.

13. Abscheideanlage (1) nach einem der vorhergehenden Ansprüche,
**dadurch gekennzeichnet,**
**dass** der Abscheidebehälter (2) eine sich etwa länglich erstreckende Form aufweist, wobei beide Endbereiche (A) des Abscheidebehälters (2) quer zur Längserstreckungsrichtung jeweils einen breiteren Querschnitt (E) aufweisen, als der Querschnitt (D) eines zwischen den beiden Endbereichen (A) befindlichen Mittelteils (B), wobei der Abscheidebehälter (2) bevorzugt im Bereich des Schlammabzugs (6) einen geringsten Querschnitt aufweist.

14. Abscheideanlage (1) nach Anspruch 13,
**dadurch gekennzeichnet,**
**dass** die lichte Weite (F) zwischen zwei Längswänden (34, 35) eines Endbereichs (A) größer ist, als eine quer dazu verlaufende lichte Weite (G) zwischen einem ersten Übergangsabschnitt (K) einer dieser Längswände (35) zu einer daran anschließenden Querwand (36) des Endbereichs (A) und einem zweiten Übergangsabschnitt (C) der gegenüberliegenden Längswand (34) des Endbereichs (A) zu dem daran anschließenden Mittelteil (B).

15. Abscheideanlage (1) nach einem der Ansprüche 13 oder 14,
**dadurch gekennzeichnet,**
**dass** die Trägerkonstruktion (39) eine Kontur aufweist, welche etwa die gleiche Form wie die Kontur des Abscheidebehälters (2) besitzt.

16. Abscheideanlage (1) nach einem der Ansprüche 13 bis 15,
**dadurch gekennzeichnet,**
**dass** im Bereich wenigstens eines Endbereichs (A) des Abscheidebehälters (2) auf dessen Oberseite (37) wenigstens eine Öffnung (38) zum Inspizieren des Abscheidebehälter-Innenraums vorgesehen ist, welche gegenüber der Horizontalen geneigt angeordnet ist.

17. Abscheideanlage (1) nach einem der Ansprüche 13 bis 16,
**dadurch gekennzeichnet,**
**dass** der Mittelteil (B) des Abscheidebehälters (2) und/oder der Trägerkonstruktion (3) eine Aussparung (45) zum Aufnehmen von Leitungen (46) und Aggregaten (47) bildet.

18. Abscheideanlage (1) nach Anspruch 17,
**dadurch gekennzeichnet,**
**dass** die von dem Abscheidebehälter (2) entferntest liegende Kontur (48) der in der Aussparung (45) angeordneten Leitungen (46) und Aggregate (47) zusammen mit dem Mittelteil (B) einen gemeinsamen Querschnitt (L) aufweist, welcher etwa dem größten Querschnitt (M) der Endbereiche (A) entspricht.
